# EUROPÄISCHE PATENTSCHRIFT

(11) **EP 3 942 909 B1**
(45) Veröffentlichungstag und Bekanntmachung des Hinweises auf die Patenterteilung: **01.03.2023**
(21) Anmeldenummer: 21401029.0
(22) Anmeldetag: 13.07.2021
(51) Int. Cl.: A01B 3/421, A01B 15/14, F15B 11/20

(54) **ANBAUDREHPFLUG**
MOUNTED REVERSIBLE PLOUGH
CHARRUE RÉVERSIBLE PORTÉE

(30) Priorität: 21.07.2020 DE 102020119123
(43) Veröffentlichungstag der Anmeldung: 26.01.2022
(73) Patentinhaber: Amazonen-Werke H. Dreyer SE & Co. KG, 49205 Hasbergen (DE)
(72) Erfinder: Wilken, Martin, 26131 Oldenburg (DE); Hoffmann, Karl-Peter, 27798 Hude (DE); Rehnen, Pascal, 49328 Melle (DE)

(56) Entgegenhaltungen:
- EP-A1- 3 753 384
- WO-A1-2014/204317
- DE-A1- 3 046 145
- DE-A1- 10 201 337
- DE-A1-102007 037 258
- DE-A1-102017 116 592

## Beschreibung

Die Erfindung betrifft einen Anbaudrehpflug gemäß dem Oberbegriff des Patentanspruches 1.

Ein derartiger Anbaudrehpflug ist in EP 2 659 758 B1 beschrieben. Der Anbaudrehpflug weist an seinem vorderen Ende einen Anbaubock zum Anbau an eine Zugmaschine, wie beispielsweise einen Ackerschlepper, auf. Ferner umfasst der Anbaudrehpflug wie üblich einen Pflugrahmen, der über ein Lenkergetriebe an dem Anbaubock beweglich angeordnet ist. Der Pflugrahmen trägt schwenkbar daran angeordnete Pflugkörper, die sich mittels eines Schnittbreitenaktors in ihrer Arbeitsbreite in einstellbarer Weise verschwenken lassen. Üblicherweise wird der Pflugrahmen dabei zumindest teilweise gegenüber dem Anbaubock verschwenkt. Der Pflugrahmen ist ferner mittels eines Spurweitenaktors zumindest annährend parallel zur Fahrtrichtung gegenüber dem Anbaubock über das Lenkergetriebe in der Vorderfurchenbreite an die Spurweite der Zugmaschine angepasst einstellbar verschiebbar. Das Lenkergetriebe lässt sich hierbei mittels des Spurweitenaktors derart deformieren, dass der Pflugrahmen in einstellbarer Weise parallel zur Fahrtrichtung verschiebbar ist, so dass die Position des in Fahrtrichtung vordersten Pflugkörpers der eingestellten Arbeitsbreite angepasst ist. Das heißt der Abstand des ersten Pflugkörpers von der Innenkante der Spur der Zugmaschine entspricht vorzugsweise der eingestellten Arbeitsbreite. Daraus resultiert die Notwendigkeit die Vorderfurchenbreite anzupassen sobald die Arbeitsbreite der Pflugkörper verstellt wird.

Um den Spurweitenaktor bei veränderter Einstellung der Arbeitsbreite in eine geeignete Hubstellung zu verbringen, ist bei diesem Anbaudrehpflug eine Rahmenverschiebesteuerung vorgesehen. Der Spurweitenaktor ist mittels der Rahmenverschiebesteuerung für verschiedene Hubstellungen des Schnittbreitenaktors in verschiedene Hubstellungen zum Erreichen einer an die Arbeitsbreite angepassten Vorderfurchenbreite steuerbar. Die Rahmenverschiebesteuerung ist bei diesem Anbaudrehpflug als hydraulische Kopplungseinrichtung ausgeführt, die insgesamt drei Anschlüsse an eine Druckquelle der Zugmaschine, welche auch als Steuergeräte bezeichnet werden, aufweist.

Die Vorderfurchenbreite ist bei der gewünschten Arbeitsbreite folglich nach Anbau an die Zugmaschine an dessen Spurweite mittels des Spurweitenaktors anzupassen. Hierzu weist diese Rahmenverschiebesteuerung einen separaten Anschluss an die Druckquelle der Zugmaschine, also an eines der Steuergeräte, auf. Die Steuergeräte können vereinfacht als 3/2-Wegeventile betrachtet werden, so dass der Spurweitenaktor sich separat in beide Richtungen verfahren, also aus- und einfahren, lässt und auf Block geschaltet werden kann. Die Rahmenverschiebesteuerung weist zwei weitere Anschlüsse an Steuergeräte der Zugmaschine auf, um den Schnittbreitenaktor zu verfahren.

Diese Ausführungsform der Rahmenverschiebesteuerung ist nachteilig, da moderne Anbaudrehpflüge regelmäßig eine Vielzahl weiterer hydraulischer Funktionen aufweisen. Beispielhaft zu nennen wären eine Wendeeinrichtung, eine hydraulische Stein- bzw. Überlastsicherung, eine hydraulische Neigungsverstellung, ein hydraulisch verschwenkbares Tiefenführungsrad, ein hydraulischer Oberlenker und/oder ein Zugkraftverstärker. Diese bedürfen ebenfalls dem Anschluss an ein Steuergerät der Zugmaschine, wobei die Anzahl der an der Zugmaschine vorhandenen Steuergeräte begrenzt ist. Die Rahmenverschiebesteuerung ist bei diesem Pflug derart aufgebaut, dass insgesamt drei Steuergeräte benötigt werden, welche somit nicht mehr für andere Funktionen zur Verfügung stehen. Der umsetzbare Funktionsumfang dieses Pfluges ist somit eingeschränkt.

Es sind ferner weitere Anbaudrehpflüge bekannt, deren Rahmenverschiebesteuerung als mechanisches Übersetzungsgetriebe ausgeführt ist. Hierdurch kann zumindest ein Anschluss an ein Steuergerät der Zugmaschine entfallen. Allerdings weisen derartige Übersetzungsgetriebe regelmäßig übersetzungsbedingte Ungenauigkeit auf, so dass die Vorderfurchenbreite nicht optimal an eine veränderte Arbeitsbreite anpassbar ist. Ferner sind hierzu eine Vielzahl drehbar miteinander verbundener Bauteile erforderlich, welche aufwändig zu montieren sind und sich bewegungsbedingt schnell verschleißen. Derartige Anbaudrehpflüge weisen daher gesteigerte Produktions- und Instandhaltungskosten und eine mangelnde Einstellgenauigkeit auf.

Ein weiterer Drehpflug ist aus der Druckschrift DE 10 2007 037258 A1 bekannt.

Die Aufgabe der vorliegenden Erfindung ist es, einen Anbaudrehpflug mit verbesserter Rahmenverschiebesteuerung zu schaffen, die verringerte, insbesondere hydraulische, Anforderungen an die Zugmaschine hat und vorzugsweise eine gesteigerte Einstellgenauigkeit aufweist.

Diese Aufgabe wird erfindungsgemäß durch einen Anbaudrehpflug mit den Merkmalen des unabhängigen Anspruchs 1 gelöst.

Es ist vorgesehen, dass die Rahmenverschiebesteuerung ein betätigbares Wegeventil mit zumindest zwei Schaltstellungen umfasst, so dass wahlweise der Spurweitenaktor einzeln einstellbar ist oder der Schnittbreitenaktor und der Spurweitenaktor gemeinsam einstellbar sind. Vorzugsweise weist die Rahmenverschiebesteuerung so lediglich einen, insbesondere einzigen, Anschluss für eine Druckquelle der Zugmaschine auf, also für ein einziges Steuergerät. Somit erfordert der erfindungsgemäße Anbaudrehpflug eine verringerte Anzahl von Anschlüssen an der Zugmaschine, so dass die Anforderungen gesenkt sind. Die vom erfindungsgemäßen Anbaudrehpflug nicht verwendeten Anschlüsse an der Zugmaschine, also Steuergeräte, stehen somit in vorteilhafter Weise für andere hydraulische Funktionen des Anbaudrehpfluges zur Verfügung. Der Anbaudrehpflug zeichnet sich folglich durch einen gesteigerten, umsetzbaren Funktionsumfang aus.

Die Rahmenverschiebesteuerung ist somit hydraulisch ausgeführt, so dass der Spurweitenaktor für verschiedene Hubstellungen des Schnittbreitenaktors hydraulisch in verschiedene Hubstellungen zum Erreichen der an die Arbeitsbreite angepassten Vorderfurchenbreite steuerbar ist. Somit wird eine verbesserte Einstellgenauigkeit erreicht.

Die Erfindung macht sich die Erkenntnis zunutze, dass durch die erfindungsgemäße Verschaltung des Schnittbreitenaktors und des Spurweitenaktors mittels des betätigbaren Wegeventils ermöglicht ist, dass die erforderlichen Funktionen wahlweise in Abhängigkeit von der Schaltstellung des Wegeventils mit einem einzigen Steuergeärt abgebildet sind.

In einer vorteilhaften Weiterbildung des erfindungsgemäßen Anbaudrehpfluges ist vorgesehen, dass die Rahmenverschiebesteuerung ein, insbesondere entsperrbares, Rückschlagventil zwischen dem Wegeventil und dem Schnittbreitenaktor und/oder dem Spurweitenaktor umfasst. Der Schnittbreitenaktor und/oder Spurweitenaktor kann je nach Schaltstellung des Wegeventils mittels des Rückschlagventils in seiner Hubstellung gehalten werden. Vorteilhaft ist das Rückschlagventil so verschaltet, dass der jeweilige Aktor in seiner Hubstellung gehalten ist, wenn dies anhand der Schaltstellung des Wegeventils erforderlich ist.

In einer weiteren vorteilhaften Ausführungsform des erfindungsgemäßen Anbaudrehpfluges umfasst die Rahmenverschiebesteuerung zumindest ein, insbesondere entsperrbares, Rückschlagventil zwischen dem Wegeventil und einem Anschluss an eine Druckquelle, insbesondere der Zugmaschine. Mit Hilfe des zumindest einen Rückschlagventils können Leckageverluste der Rahmenverschiebesteuerung in vorteilhafter Weise verringert werden.

Der erfindungsgemäße Anbaudrehpflug ist ferner vorteilhaft dadurch weitergebildet, dass die Rahmenverschiebesteuerung ein, insbesondere entsperrbares, Rückschlagventil zwischen einem Anschluss an eine Druckquelle, insbesondere der Zugmaschine, und dem Spurweitenaktor umfasst. Vorzugsweise ist das Rückschlagventil so verschaltet, dass der Spurweitenaktor in seiner Hubstellung gehalten wird und das Rückschlagventil entsperrt ist, wenn der Schnittbreitenaktor und der Spurweitenaktor gemeinsam einstellbar sind.

Um eine besonders zuverlässige Rahmenverschiebesteuerung zu schaffen, ist in einer weiteren vorteilhaften Weiterbildung vorgesehen, dass das Wegeventil mechanisch, insbesondere von Hand, betätigbar ist. In besonders einfacher Weise kann der Bediener so manuell festlegen, ob der Spurweitenaktor separat oder der Schnittbreitenaktor und der Spurweitenaktor gemeinsam einstellbar sein sollen. Vorzugsweise ist das Wegeventil so an dem Anbaudrehpflug angeordnet, dass der Bediener von einer Zugmaschine zur Betätigung des Wegeventils absteigen muss, so dass Fehlbedienungen während der Fahrt ausgeschlossen sind.

In einer weiteren vorteilhaften Ausführungsform des erfindungsgemäßen Anbaudrehpfluges ist vorgesehen, dass in einer, insbesondere ersten, Schaltstellung des Wegeventils der Spurweitenaktor und der Schnittbreitenaktor in einer Master-Slave-Verschaltung gekoppelt sind. Durch die Master-Slave-Verschaltung in Abhängigkeit von der Schaltstellung des Wegeventils kann im Vergleich zu bisher bekannten Anbaudrehpflügen mit einer hydraulischen Rahmenverschiebesteuerung ein Anschluss an eine Druckquelle der Zugmaschine, also ein Steuergerät, entfallen bzw. wird frei für andere hydraulische Funktionen des erfindungsgemäßen Anbaudrehpfluges.

In einer weiteren besonders vorteilhaften Ausführungsform des erfindungsgemäßen Anbaudrehpfluges sind der Schnittbreitenaktor und der Spurweitenaktor derart verschaltet, dass bei Verstellung der Arbeitsbreite in einer ersten Richtung, insbesondere zu großer Arbeitsbreite, der Schnittbreitenaktor als Master und der Spurweitenaktor als Slave ausgebildet ist und/oder bei Verstellung der Arbeitsbreite in einer zweiten Richtung, insbesondere entgegengesetzter, zu kleiner Arbeitsbreite, der Spurweitenaktor als Master und der Schnittbreitenaktor als Slave ausgebildet ist. Durch diese wechselseitige Master-Slave-Verschaltung zwischen Schnittbreitenaktor und Spurweitenaktor in Abhängigkeit von der Schaltstellung des Wegeventils und der Richtung in der die Arbeitsbreite verstellt wird ist eine besonders zweckmäßige und funktionssichere Verschaltung für die Rahmenverschiebesteuerung ermöglicht. Die Umkehr der Richtung in der die Arbeitsbreite verstellbar ist kann ohne Betätigung des Wegeventils erfolgen. In vorteilhafter Weise muss lediglich die Stromrichtung des Druckfluids umgekehrt werden, so dass keine Stellbewegungen der Rahmenverschiebesteuerung erforderlich sind.

Der erfindungsgemäße Anbaudrehpflug ist ferner vorteilhaft dadurch weitergebildet, dass in einer, insbesondere zweiten, Schaltstellung des Wegeventils der Schnittbreitenaktor in seiner Hubstellung gehalten wird und/oder der Spurweitenaktor separat einstellbar ist. Durch Halten der Hubstellung des Schnittbreitenaktors in der Schaltstellung des Wegeventils in der der Spurweitenaktor separat einstellbar ist kann in vorteilhafter Weise die Vorderfurchenbreite an die Spurweite der Zugmaschine angepasst werden ohne eine Veränderung der Arbeitsbreite. Durch Halten der Hubstellung des Schnittbreitenaktors ist verhindert, dass die Arbeitsbreite unplanmäßig verändert wird.

In einer weiteren vorteilhaften Weiterbildung der Erfindung ist vorgesehen, dass das Wegeventil elektronisch, insbesondere mittels eines vorzugsweise fernbedienbaren Magnetventils, betätigbar ist. In einfacher Weise ist es dem Benutzer so ermöglicht, Einstellungen am erfindungsgemäßen Pflug elektronisch vorzunehmen, vorzugsweise aus der Kabine des Zugfahrzeugs.

Weitere Einzelheiten der Erfindung sind der Beispielsbeschreibung und den Zeichnungen zu entnehmen. Die Zeichnungen zeigen
- Fig. 1: einen erfindungsgemäßen Anbaudrehpflug in schematischer Ansicht von oben, und
- Fig.2: einen Schaltplan des Anbaudrehpfluges gemäß Fig.1.

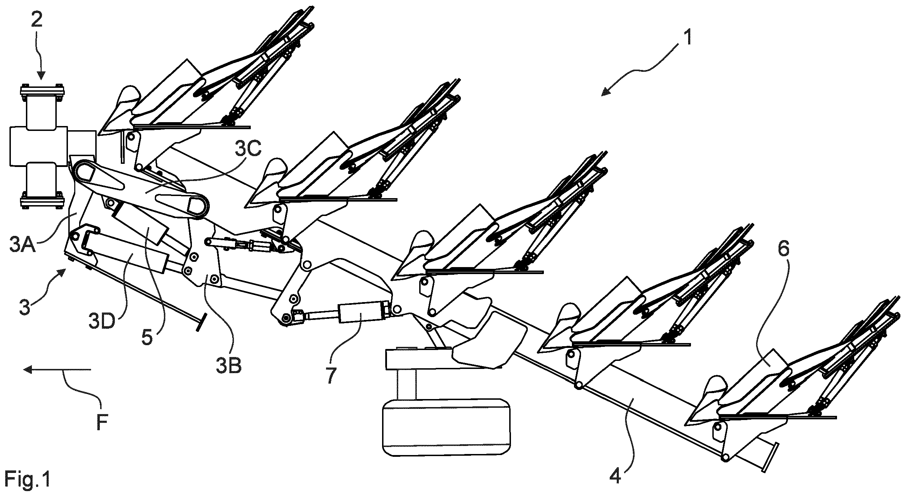

Ein Anbaudrehpflug 1 in schematischer Draufsicht ist in Fig.1 zu sehen. Der Anbaudrehpflug 1 weist an seinem in Fahrtrichtung F vorderen Ende einen Anbaubock 2 zum Anbau an einer nicht dargestellten Zugmaschine auf. An dem Anbaubock 2 ist über ein Lenkergetriebe 3 ein Pflugrahmen 4 angeordnet. Das Lenkergetriebe 3 wird bei diesem Anbaudrehpflug 1 gebildet durch eine drehbar mit dem Anbaubock 2 verbundene Wendekonsole 3A, einen der Wendekonsole 3A gegenüberliegend angeordneten Steuerhebel 3B, eine Tragschwinge 3C und einen Einschwenkaktor 3D. Die Wendekonsole 3A und der Steuerhebel 3B sind über den Einschwenkaktor 3D und die Tragschwinge 3C gelenkig miteinander verbunden, so dass der Pflugrahmen 4 über das Lenkergetriebe 3 gegenüber dem Anbaubock 2 bzw. der Zugmaschine verschoben werden kann. Hierzu ist ein Spurweitenaktor 5 vorgesehen.

Der Spurweitenaktor 5 ist bei diesem Anbaudrehpflug 1 als Hydraulikzylinder ausgeführt und im Inneren des Lenkergetriebes 3 zwischen der Tragschwinge 3C und dem Steuerhebel 3B angeordnet. Das Lenkergetriebe 3 lässt sich mittels des Spurweitenaktors 5 deformieren, so dass der Pflugrahmen 4 zumindest annährend parallel zur Fahrtrichtung F gegenüber dem Anbaubock 2 in der Vorderfurchenbreite an die Spurweite der Zugmaschine angepasst einstellbar verschiebbar ist. Die Vorderfurchenbreite, also der Abstand des in Fahrtrichtung F ersten Pflugkörpers 6 von der Innenkante der Spur der nicht dargestellten Zugmaschine, entspricht vorzugsweise der eingestellten Arbeitsbreite eines jeden Pflugkörpers 6 und sollte bei gewählter Arbeitsbreite somit zunächst mittels des Spurweitenaktors 5 an die Spurweite der Zugmaschine angepasst werden. Ferner ist die Vorderfurchenbreite mittels des Spurweitenaktors 5 einzustellen, wenn die Arbeitsbreite verstellt wird. Zur Einstellung der Arbeitsbreite ist ein Schnittbreitenaktor 7 vorgesehen.

An dem Pflugrahmen 4 ist eine Mehrzahl von Pflugkörpern 6 schwenkbar angeordnet. Die Pflugkörper 6 sind mittels des Schnittbreitenaktors 7 in ihrer Arbeitsbreite in einstellbarer Weise verschwenkbar. Durch Betätigung des Schnittbreitenaktors 7 verändert sich der Winkel des Pflugrahmens 4 zur Fahrtrichtung F, wobei die Pflugkörper 6 derart am Pflugrahmen 4 verschwenkt werden, dass sie in Fahrtrichtung F ausgerichtet bleiben. Die Arbeitsbreite ist somit einstellbar. Zur Anpassung der Vorderfurchenbreite mittels des Spurweitenaktors 5 an die Arbeitsbreite, welche in vorstehender Weise mittels des Schnittbreitenaktors 7 einstellbar ist, ist eine Rahmenverschiebesteuerung 8 vorgesehen.

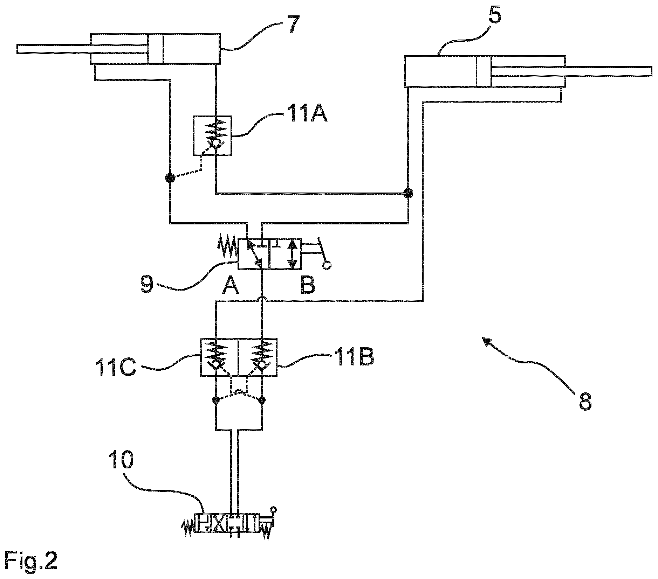

Der Spurweitenaktor 5 ist mittels der Rahmenverschiebesteuerung 8 für verschiedene Hubstellungen des Schnittbreitenaktors 7, also für verschiedene eingestellte Arbeitsbreiten der Pflugkörper 6, in verschiedene Hubstellungen zum Erreichen einer an die Arbeitsbreite angepassten Vorderfurchenbreite steuerbar. Wie Fig.2 zeigt, umfasst die Rahmenverschiebesteuerung 8 hierzu ein betätigbares Wegeventil 9 mit zwei Schaltstellungen A, B. Je nach Schaltstellung A, B des Wegeventils 9 ist wahlweise der Spurweitenaktor 5 einzeln einstellbar, um die Vorderfurchenbreite initial an die Spurweite der Zugmaschine anzupassen, oder der Schnittbreitenaktor 7 und der Spurweitenaktor 5 sind gemeinsam einstellbar. Das Wegeventil 9 ist bei diesem Anbaudrehpflug 1 mechanisch, nämlich von Hand, betätigbar und so zwischen den Schaltstellungen A, B verbringbar. Alternativ wäre in einer nicht gezeigten Ausführungsform denkbar, dass das Wegeventil 9 elektronisch, insbesondere mittels eines vorzugsweise fernbedienbaren Magnetventils, betätigbar ist.

Zur Einstellung des Schnittbreitenaktors 7 und des Spurweitenaktors 5 umfasst die Rahmenverschiebesteuerung 8 einen einzigen Anschluss an eine Druckquelle der Zugmaschine, ein sogenanntes doppeltwirkendes Steuergerät 10. In der in Fig.2 in Schaltung befindlichen Schaltstellung A des Wegeventils 9 sind der Schnittbreitenaktor 7 und der Spurweitenaktor 5 gemeinsam einstellbar, so dass sich die Vorderfurchenbreite einer veränderten Arbeitsbreite anpasst. Hierzu sind in dieser Schaltstellung Ader Schnittbreitenaktor 7 und der Spurweitenaktor 5 mittels des Steuergerätes 10 mit Druckfluid versorgbar.

Durch Betätigung des Steuergerätes 10 kann in der Schaltstellung A des Wegeventils 9 entweder dem Schnittbreitenaktor 7 oder dem Spurweitenaktor 5 primär das Druckfluid zugebracht werden. Bei primärer Zubringung des Druckfluids an den Schnittbreitenaktor 7 strömt dieses in die Ringkammer desselbigen, so dass der Schnittbreitenaktor 7 einfährt. Bei diesem Anbaudrehpflug 1 wird die Arbeitsbreite so in Richtung zu großer Arbeitsbreiter verstellt. Der Schnittbreitenaktor 7 und der Spurweitenaktor 5 sind in dieser Schaltstellung A in einer Master-Slave-Verschaltung gekoppelt, so dass aus der Kolbenkammer des Schnittbreitenaktors 7 verdrängtes Druckfluid der Kolbenkammer des Spurweitenaktors 5 zuströmt. Der Spurweitenaktor 5 wird dadurch ausgefahren und deformiert das Lenkergetriebe 3 dadurch derart, dass sich die Vorderfurchenbreite der größeren Arbeitsbreite anpasst. Der Schnittbreitenaktor 7 ist bei Verstellung in dieser Richtung somit als Master und der Spurweitenaktor 5 als Slave ausgebildet.

Bei primärer Zubringung des Druckfluids an den Spurweitenaktor 5 strömt dieses in die Ringkammer desselbigen, so dass der Spurweitenaktor 5 einfährt. Durch die Master-Slave-Verschaltung des Spurweitenaktors 5 mit dem Schnittbreitenaktor 7 in der in Fig.2 gezeigten Schaltstellung A des Wegeventils 9 strömt aus der Kolbenkammer des Spurweitenaktors 5 verdrängtes Druckfluid der Kolbenkammer des Schnittbreitenaktors 7 zu. Der Schnittbreitenaktor 7 wird so indirekt über den Spurweitenaktor 5 ausgefahren, so dass die Arbeitsbreite in Richtung zu kleiner Arbeitsbreite einstellbar ist. Der Spurweitenaktor 5 ist bei Verstellung der Arbeitsbreite in dieser Richtung somit als Master und der Schnittbreitenaktor 7 als Slave ausgebildet.

Durch Betätigung des Wegeventils 9 kann die zweite Schaltstellung B in Schaltung gebracht werden. In dieser Schaltstellung B des Wegeventils 9 wird der Schnittbreitenaktor 7 in seiner Hubstellung gehalten und der Spurweitenaktor 5 ist separat einstellbar. Durch Betätigung des Steuergerätes 10 ist wahlweise der Kolbenkammer oder der Ringkammer des Spurweitenaktors 5 Druckfluid von der Druckquelle der Zugmaschine zubringbar, so dass der Spurweitenaktor 5 in beide Richtungen verfahrbar ist. Der Schnittbreitenaktor 7 wird in dieser zweiten Schaltstellung B des Wegeventils 9 in seiner Hubstellung gehalten, so dass die Vorderfurchenbreite an die Spurweite der Zugmaschine anpassbar ist ohne eine Veränderung der Arbeitsbreite.

In vorteilhafter Weise ist somit mittels dieser Rahmenverschiebesteuerung 8 anhand der Schaltstellungen A, B des Wegeventils 9 nur ein einziges Steuergerät 10 benötigt, um wahlweise den Spurweitenaktor 5 einzeln einzustellen oder den Schnittbreitenaktor 7 und den Spurweitenaktor 5 gemeinsam einzustellen.

Die Rahmenverschiebesteuerung 8 umfasst ferner einige entsperrbare Rückschlagventile 11A - C. Ein Rückschlagventil 11 A ist zwischen dem Wegeventil 9 und dem Schnittbreitenaktor 7 angeordnet, so dass es als Sicherung dazu dient, dass der Schnittbreitenaktor 7 in der Schaltstellung B des Wegeventils 9 in seiner Hubstellung gehalten wird. Alternativ oder zusätzlich wäre in einer nicht gezeigten Ausführungsform denkbar, dass zwischen dem Wegeventil 9 und dem Spurweitenaktor 5 ein Rückschlagventil 11 angeordnet ist.

Ein weiteres Rückschlagventil 11B der Rahmenverschiebesteuerung 8 ist zwischen dem Wegeventil 9 und dem Anschluss an die Druckquelle der Zugmaschine, also dem Steuergerät 10, angeordnet, um Leckageverluste zu vermeiden. Zudem überträgt sich eine an dem Steuergerät 10 wählbare Schwimmstellung somit nicht auf den Anbaudrehpflug 1 bzw. seine Aktoren 3D, 5, 7 und hohe Staudrücke werden vermieden. Ferner ist ein drittes Rückschlagventil 11C der Rahmenverschiebesteuerung 8 zwischen dem Anschluss an die Druckquelle der Zugmaschine, also dem Steuergerät 10, und dem Spurweitenaktor 5 angeordnet, als Sicherung, um den Spurweitenaktor 5 in seiner Hubstellung zu halten wenn dies erforderlich ist.

### Bezugszeichenliste

- 1: Anbaudrehpflug
- F: Fahrtrichtung
- 2: Anbaubock
- 3: Lenkergetriebe
- 3A: Wendekonsole
- 3B: Steuerhebel
- 3C: Tragschwinge
- 3D: Einschwenkaktor
- 4: Pflugrahmen
- 5: Spurweitenaktor
- 6: Pflugkörper
- 7: Schnittbreitenaktor
- 8: Rahmenverschiebesteuerung
- 9: Wegeventil
- A, B: Schaltstellung
- 10: Steuergerät
- 11A-C: Rückschlagventil

## Patentansprüche

1. Anbaudrehpflug (1) mit einem Anbaubock (2) zum Anbau an einer Zugmaschine, einem Pflugrahmen (4), der über ein Lenkergetriebe (3) an dem Anbaubock (2) angeordnet ist, mit daran schwenkbar angeordneten Pflugkörpern (6), wobei die Pflugkörper (6) mittels eines Schnittbreitenaktors (7) in ihrer Arbeitsbreite in einstellbarer Weise verschwenkbar sind, wobei der Pflugrahmen (4) mittels eines Spurweitenaktors (5) zumindest annähernd parallel zur Fahrtrichtung (F) gegenüber dem Anbaubock (2) über das Lenkergetriebe (3) in der Vorderfurchenbreite an die Spurweite der Zugmaschine angepasst einstellbar verschiebbar ist, wobei der Spurweitenaktor (5) mittels einer Rahmenverschiebesteuerung (8) für verschiedene Hubstellungen des Schnittbreitenaktors (7) in verschiedene Hubstellungen zum Erreichen einer an die Arbeitsbreite angepassten Vorderfurchenbreite steuerbar ist, **dadurch gekennzeichnet, dass** die Rahmenverschiebesteuerung (8) ein betätigbares Wegeventil (9) mit zumindest zwei Schaltstellungen umfasst, so dass wahlweise der Spurweitenaktor (5) einzeln einstellbar ist oder der Schnittbreitenaktor (7) und der Spurweitenaktor (5) gemeinsam einstellbar sind.

2. Anbaudrehpflug (1) nach Anspruch 1, **dadurch gekennzeichnet, dass** die Rahmenverschiebesteuerung (8) ein, insbesondere entsperrbares, Rückschlagventil (11A) zwischen dem Wegeventil (9) und dem Schnittbreitenaktor (7) und/oder dem Spurweitenaktor (5) umfasst.

3. Anbaudrehpflug (1) nach zumindest einem der vorstehenden Ansprüche, **dadurch gekennzeichnet, dass** die Rahmenverschiebesteuerung (8) zumindest ein, insbesondere entsperrbares, Rückschlagventil (11B) zwischen dem Wegeventil (9) und einem Anschluss an eine Druckquelle (10), insbesondere der Zugmaschine, umfasst.

4. Anbaudrehpflug (1) nach zumindest einem der vorstehenden Ansprüche, **dadurch gekennzeichnet, dass** die Rahmenverschiebesteuerung (8) ein, insbesondere entsperrbares, Rückschlagventil (11C) zwischen einem Anschluss an eine Druckquelle (10), insbesondere der Zugmaschine, und dem Spurweitenaktor (5) umfasst.

5. Anbaudrehpflug (1) nach zumindest einem der vorstehenden Ansprüche, **dadurch gekennzeichnet, dass** das Wegeventil (9) mechanisch, insbesondere von Hand, betätigbar ist.

6. Anbaudrehpflug (1) nach zumindest einem der vorstehenden Ansprüche, **dadurch gekennzeichnet, dass** in einer, insbesondere ersten, Schaltstellung (A) des Wegeventils (9) der Spurweitenaktor (5) und der Schnittbreitenaktor (7) in einer Master-Slave-Verschaltung gekoppelt sind.

7. Anbaudrehpflug (1) nach Anspruch 6, **dadurch gekennzeichnet, dass** der Schnittbreitenaktor (7) und der Spurweitenaktor (5) derart verschaltet sind, dass bei Verstellung der Arbeitsbreite in einer ersten Richtung, insbesondere zu großer Arbeitsbreite, der Schnittbreitenaktor (7) als Master und der Spurweitenaktor (5) als Slave ausgebildet ist und/oder bei Verstellung der Arbeitsbreite in einer zweiten Richtung, insbesondere entgegengesetzter, zu kleiner Arbeitsbreite, der Spurweitenaktor (5) als Master und der Schnittbreitenaktor (7) als Slave ausgebildet ist.

8. Anbaudrehpflug (1) nach zumindest einem der vorstehenden Ansprüche, **dadurch gekennzeichnet, dass** in einer, insbesondere zweiten, Schaltstellung (B) des Wegeventils (9) der Schnittbreitenaktor (7) in seiner Hubstellung gehalten wird und/oder der Spurweitenaktor (5) separat einstellbar ist.

9. Anbaudrehpflug (1) nach zumindest einem der vorstehenden Ansprüche, **dadurch gekennzeichnet, dass** das Wegeventil (9) elektronisch, insbesondere mittels eines vorzugsweise fernbedienbaren Magnetventils, betätigbar ist.

## Claims

1. Mounted reversible plow (1) comprising a headstock (2) for mounting on a tractor and comprising a plow frame (4), which is arranged on the headstock (2) via a link mechanism (3), with plow bodies (6) pivotably arranged thereon, the plow bodies (6) being adjustably pivotable in their working width by means of a cutting width actuator (7), the plow frame (4) being adjustably displaceable in the front furrow width, so as to be adapted to the track width of the tractor, by means of a track width actuator (5) at least approximately in parallel with the direction of travel (F) relative to the headstock (2) via the link mechanism (3), the track width actuator (5) being controllable by means of a frame displacement controller (8) for different stroke positions of the cutting width actuator (7) into different stroke positions for achieving a front furrow width adapted to the working width, **characterized in that** the frame displacement controller (8) comprises an actuatable directional control valve (9) with at least two switching positions, so that the track width actuator (5) can optionally be adjusted individually or the cutting width actuator (7) and the track width actuator (5) can be adjusted together.

2. Mounted reversible plow (1) according to claim 1, **characterized in that** the frame displacement controller (8) comprises an in particular releasable check valve (11A) between the directional control valve (9) and the cutting width actuator (7) and/or the track width actuator (5).

3. Mounted reversible plow (1) according to at least one of the preceding claims, **characterized in that** the frame displacement controller (8) comprises at least one in particular releasable check valve (11B) between the directional control valve (9) and a connection to a pressure source (10), in particular the tractor.

4. Mounted reversible plow (1) according to at least one of the preceding claims **characterized in that** the frame displacement controller (8) comprises an in particular releasable check valve (11C) between a connection to a pressure source (10), in particular the tractor, and the track width actuator (5).

5. Mounted reversible plow (1) according to at least one of the preceding claims **characterized in that** the directional control valve (9) can be actuated mechanically, in particular by hand.

6. Mounted reversible plow (1) according to at least one of the preceding claims, **characterized in that** in an in particular first switching position (A) of the directional control valve (9), the track width actuator (5) and the cutting width actuator (7) are coupled in a master-slave circuit.

7. Mounted reversible plow (1) according to claim 6, **characterized in that** the cutting width actuator (7) and the track width actuator (5) are connected in such a way that when the working width is adjusted in a first direction, in particular to a large working width, the cutting width actuator (7) is designed as a master and the track width actuator (5) is designed as a slave and/or when the working width is adjusted in a second direction, in particular opposite, to a smaller working width, the track width actuator (5) is designed as a master and the cutting width actuator (7) is designed as a slave.

8. Mounted reversible plow (1) according to at least one of the preceding claims **characterized in that** in an in particular second switching position (B) of the directional control valve (9), the cutting width actuator (7) is held in its stroke position and/or the track width actuator (5) can be adjusted separately.

9. Mounted reversible plow (1) according to at least one of the preceding claims **characterized in that** the directional control valve (9) can be actuated electronically, in particular by means of a preferably remotely operated solenoid valve.

## Revendications

1. Charrue réversible (1) portée, présentant un support de montage (2) pour le montage sur un tracteur, un cadre de charrue (4), qui est agencé sur le support de montage (2) par l'intermédiaire d'un mécanisme articulé (3), présentant des corps de charrue (6) qui y sont agencés de manière pivotante, les corps de charrue (6) pouvant être pivotés de manière réglable en ce qui concerne leur largeur de travail au moyen d'un actionneur de largeur de coupe (7), le cadre de charrue (4) pouvant être déplacé de manière réglable au moyen d'un actionneur de largeur de voie (5) au moins de manière quasiment parallèle au sens de déplacement (F) par rapport au support de montage (2) par l'intermédiaire du mécanisme articulé (3) dans la largeur de la fourche avant de manière adaptée à la largeur de voie du tracteur, l'actionneur de largeur de voie (5) pouvant être commandé au moyen d'une commande de déplacement de cadre (8) pour différentes positions de levage de l'actionneur de largeur de coupe (7) dans différentes positions de levage pour atteindre une largeur de fourche avant adaptée à la largeur de travail, **caractérisée en ce que** la commande de déplacement de cadre (8) comprend une soupape de distribution (9) pouvant être actionnée, présentant au moins deux positions de commutation, de telle sorte qu'au choix, l'actionneur de largeur de voie (5) soit réglable individuellement ou l'actionneur de largeur de coupe (7) et l'actionneur de largeur de voie (5) soient réglables ensemble.

2. Charrue réversible (1) portée selon la revendication 1,
**caractérisée en ce que** la commande de déplacement de cadre (8) comprend une soupape antiretour (11A), en particulier pouvant être débloquée, entre la soupape de distribution (9) et l'actionneur de largeur de coupe (7) et/ou l'actionneur de largeur de voie (5).

3. Charrue réversible (1) portée selon au moins l'une quelconque des revendications précédentes, **caractérisée en ce que** la commande de déplacement de cadre (8) comprend au moins une soupape antiretour (11B), en particulier pouvant être débloquée, entre la soupape de distribution (9) et un raccordement à une source de pression (10), en particulier du tracteur.

4. Charrue réversible (1) portée selon au moins l'une quelconque des revendications précédentes, **caractérisée en ce que** la commande de déplacement de cadre (8) comprend une soupape antiretour (11C), en particulier pouvant être débloquée, entre un raccordement à une source de pression (10), en particulier du tracteur, et l'actionneur de largeur de voie (5).

5. Charrue réversible (1) portée selon au moins l'une quelconque des revendications précédentes, **caractérisée en ce que** la soupape de distribution (9) peut être actionnée mécaniquement, en particulier manuellement.

6. Charrue réversible (1) portée selon au moins l'une quelconque des revendications précédentes, **caractérisée en ce que** dans une, en particulier une première, position de commutation (A) de la soupape de distribution (9), l'actionneur de largeur de voie (5) et l'actionneur de largeur de coupe (7) sont accouplés dans une circuiterie maître-esclave.

7. Charrue réversible (1) portée selon la revendication 6,
**caractérisée en ce que** l'actionneur de largeur de coupe (7) et l'actionneur de largeur de voie (5) sont connectés de manière telle que lors du réglage de la largeur de travail dans un premier sens, en particulier vers une plus grande largeur de travail, l'actionneur de largeur de coupe (7) soit conçu comme maître et l'actionneur de largeur de voie (5) soit conçu comme esclave et/ou lors du réglage de la largeur de travail dans un deuxième sens, en particulier opposé, vers une plus petite largeur de travail, l'actionneur de largeur de voie (5) soit conçu comme maître et l'actionneur de largeur de coupe (7) soit conçu comme esclave.

8. Charrue réversible (1) portée selon au moins l'une quelconque des revendications précédentes, **caractérisée en ce que** dans une, en particulier une deuxième, position de commutation (B) de la soupape de distribution (9), l'actionneur de largeur de coupe (7) est maintenu dans sa position de levage et/ou l'actionneur de largeur de voie (5) peut être réglé séparément.

9. Charrue réversible (1) portée selon au moins l'une quelconque des revendications précédentes, **caractérisée en ce que** la soupape de distribution (9) peut être actionnée électroniquement, en particulier au moyen d'une soupape magnétique pouvant de préférence être commandée à distance.
